**Europäisches Patentamt**

**European Patent Office**

**Office européen des brevets**

(19)

(11) Numéro de publication: **0 097 581**
**B1**

(12) **FASCICULE DE BREVET EUROPEEN**

(45) Date de publication du fascicule du brevet:
**17.09.86**

(21) Numéro de dépôt: **83401233.8**

(22) Date de dépôt: **16.06.83**

(51) Int. Cl.⁴: **F 16 K 17/168**, F 16 K 7/16,
F 16 K 27/02, B 23 P 11/00

(54) **Appareil de robinetterie utilisant une membrane.**

(30) Priorité: **21.06.82 FR 8210771**

(43) Date de publication de la demande:
**04.01.84 Bulletin 84/1**

(45) Mention de la délivrance du brevet:
**17.09.86 Bulletin 86/38**

(84) Etats contractants désignés:
**BE DE GB IT NL SE**

(56) Documents cités:
**EP - A - 0 096 616**
**FR - A - 1 045 410**
**FR - A - 1 113 983**
**FR - A - 1 510 183**

(73) Titulaire: **SAUNIER DUVAL EAU CHAUDE CHAUFFAGE
S.D.E.C.C. - Société anonyme, Les Miroirs 18 avenue
d'Alsace, F-92400 Courbevoie (FR)**

(72) Inventeur: **Rousselet Claude, 36, rue de la Solaie,
F-45550 Saint Denis de l'Hotel (FR)**

(74) Mandataire: **Lhuillier, René, ARMENGAUD JEUNE
CABINET LEPEUDRY 6, rue du Fg. St-Honoré,
F-75008 Paris (FR)**

## Description

L'invention se rapporte aux appareils de robinetterie à usage domestique et industriel utilisant une membrane et notamment aux soupapes de sûreté pour installations de chauffage central.

On connaît des soupapes de sûreté qui se composent entre autres d'un corps comprenant deux tubulures de raccordement perpendiculaire entre elles, qui s'intègrent par exemple dans une conduite d'installation de chauffage central. Une soupape de sûreté correspondant au préambule de la revendication 1 est déjà connue du FR-A 1 045 410.

Ces soupapes comportent généralement un ressort sollicitant vers un siège un clapet obturateur qui empêche le passage du fluide entre les deux tubulures tant que la pression de ce fluide n'excède pas la valeur de tarage du ressort, comme décrit dans le FR-A 1 045 410. Il est également prévu des moyens permettant de régler la pression de tarage du ressort ainsi que des moyens pour commander l'ouverture du clapet obturateur, par exemple en vue de la purge du circuit.

Pour placer le ressort ainsi que les moyens de réglage et de commande à l'abri du fluide et pour commander le clapet obturateur, il est connu de disposer au-dessus du corps de soupape, une membrane souple qui, évidemment est solidaire en son centre du clapet obturateur. Cette membrane est généralement maintenue au-dessus du corps de soupape par un manchon rapporté ou par une bague bridée ou vissée sur le corps du manchon, comme indiqué dans le EP-A 96 616, déposé avec une priorité en France du 9.6.82 et publié le 21.12.83.

Or, il s'avère qu'un tel montage de la membrane entre deux pièces vissées présente des inconvénients. En effet, en vissant le manchon sur le corps, on risque de vriller la membrane et de lui imposer des contraintes pouvant modifier ses caractéristiques de fonctionnement. On sait que ces soupapes de sûreté doivent respecter des prescriptions strictes et elles doivent aussi être réglées pour une pression de fonctionnement déterminée. Par conséquent, en modifiant les caractéristiques de la membrane au moment de son montage, la pression de fonctionnement n'est bien souvent plus respectée.

On connaît par ailleurs, un autre système de fixation de membrane utilisant la technique du sertissage notamment selon le brevet FR-A 1 113 983 qui consiste à rabattre et sertir sur une membrane et sur une cloche guidant la tige de commande une lèvre mince annulaire qui formait auparavant une saillie à partir d'un support périphérique.

L'invention, telle qu'elle est caractérisée dans la revendication 1, met en application cette technique de sertissage dans une soupape de sûreté, en évitant les inconvénients précités.

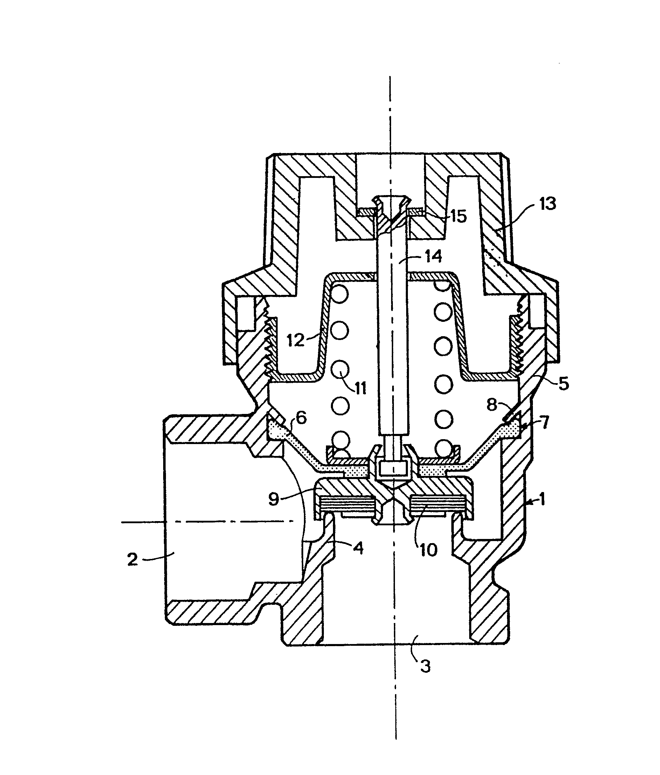

Les caractéristiques particulières et avantages de l'invention ressortiront de la description ci-après faite, à titre d'exemple non limitatif, en référence au dessin annexé qui représente une vue en coupe verticale d'une soupape de sûreté conforme à l'invention.

La soupape de sûreté à membrane représentée à la figure est formée d'un corps 1 comprenant deux tubulures de raccordement 2 et 3, perpendiculaires entre elles pour des conduites tubulaires non représentées. Ces conduites peuvent être par exemple, des conduites d'une installation de chauffage central. Un épaulement circulaire 4 formant un siège de clapet est prévu à l'intérieur du corps, dans l'axe de la tubulure de raccordement 3.

La partie supérieure du corps 1 comporte un prolongement 5 en forme générale de cylindre, dans l'axe du siège de clapet 4 et au-dessus de celui-ci. Par conséquent, le corps 1 de la soupape formé par le prolongement cylindrique 5, les deux tubulures de raccordement 2 et 3 et le siège de clapet 4, est réalisé en une seule pièce monobloc.

Une membrane souple est placée dans une gorge usinée 7 prévue directement à l'intérieur du corps 1. Cette membrane 6 est maintenue en position dans la gorge 7 par sertissage d'une languette annulaire 8 prévue à la limite supérieure de ladite gorge. Un outil spécial prenant appui en fin de course sur la face supérieure du corps 1 assure ce sertissage. La membrane 6 supporte un clapet obturateur 9 dont la bague d'étanchéité 10 est appliquée contre le siège 4 par un ressort de compression 11 maintenu entre la face supérieure du clapet obturateur 10 et une rondelle 12, en tôle découpée et emboutie, vissée à l'intérieur du corps 1.

La face supérieure du corps 1 est coiffée par un volant de manœuvre 13 relié au clapet obturateur 9 par une tige de liaison 14 qui est rivée sur une rondelle 15 prenant appui sur le fond d'un puits prévu à la partie supérieure du volant de manœuvre 13.

Le montage de la membrane dans une gorge prévue directement dans le corps de soupape évite l'utilisation d'une pièce supplémentaire de maintien de ladite membrane tout en garantissant ses caractéristiques de fonctionnement grâce à la précision du sertissage. En effet, le corps de soupape étant réalisé en une seule pièce, il est possible d'utiliser la face supérieure de ce corps comme cote de référence pour l'outil de sertissage, évitant ainsi l'écrasement de la membrane.

## Revendication

1. Soupape de sûreté à levée verticale du clapet obturateur (9), comprenant un corps (1) muni de deux tubulures de raccordement (2, 3) et une membrane (6) de commande qui supporte le clapet obturateur (9), ce clapet obturateur (9) et la membrane (6) étant appliqués normalement contre le siège (4) par un ressort de compression (11), la partie supérieure du corps (1) comportant dans l'axe du siège (4) du clapet obturateur un prolongement cylindrique (5) à l'intérieur duquel est montée dans une gorge (7) la membrane de commande, caractérisée en ce que le clapet obturateur (9) est relié à un volant de manœuvre

(13) par une tige de liaison (14) et en ce qu'une languette annulaire (8) qui est prévue à la limite supérieure de la gorge (7) et forme une seule pièce avec le prolongement cylindrique (5) du corps, est rabattue sur la membrane de commande (6) au moyen d'un outil prenant appui en fin de course sur la face supérieure du prolongement cylindrique (5) du corps (1).

## Claim

1. Safety-valve with a vertical lift of the cut-off clack-valve (9), comprising a body (1) provided with two connecting pipes (2, 3) and a control diaphragm (6) which supports the cut-off clack-valve (9), this clack-valve (9) and the diaphragm (6) being normally pressed against the seat (4) by a compression spring (11), the upper part of the body (1) comprising on the axis of the seat (4) of the clack-valve a cylindrical extension (5) inside which the control diaphragm is mounted in a groove (7), characterised in that the clack-valve (9) is connected to an operating hand-wheel (13) by a connecting rod (14) and in that an annular tongue (8) which is provided at the upper limit of the groove (7) and forms a single piece with the cylindrical extension (5) of the body is turned down onto the control diaphragm (6) by means of a tool bearing at the end of travel on the upper base of the cylindrical extension (5) of the body (1).

## Patentanspruch

Sicherheitsventil mit vertikalem Hub der Verschlussklappe (9), umfassend ein Ventilgehäuse, welches mit zwei Anschlussstutzen (2, 3) und einer die Verschlussklappe (9) stützenden Membran (6) versehen ist, wobei die Verschlussklappe (9) und die Membran in Normalstellung durch eine Druckfeder (11) gegen den Sitz (4) gedrückt sind und der obere Abschnitt des Ventilgehäuses (1) in der Achse des Sitzes (4) der Verschlussklappe einen zylindrischen Fortsatz (5) aufweist, in dessen Innerem die Membrane in einer Nut (7) angeordnet ist, dadurch gekennzeichnet, dass die Verschlussklappe (9) mit einem Betätigungsteil (13) durch eine Verbindungsstange (14) verbunden und eine ringförmige, am oberen Rand der Nut (7) vorgesehene und mit dem zylindrischen Fortsatz (5) des Ventilgehäuses (1) einstückig ausgebildete Zunge (8) auf die Membran (6) mittels eines sich in Endstellung auf der oberen Fläche des zylindrischen Fortsatzes (5) des Ventilgehäuses (1) abstützenden Werkzeuges gedrückt ist.